# EUROPEAN PATENT SPECIFICATION

(11) **EP 0 322 873 B1**
(45) Date of publication and mention of the grant of the patent: **03.08.1994**
(21) Application number: 88121741.8
(22) Date of filing: 28.12.1988
(51) Int. Cl.: B32B 5/00, B32B 27/06, B32B 33/00

(54) **Sheet-shaped molding material**
Plattenförmiges Formmaterial
Matériau à mouler en forme de feuille

(30) Priority: 28.12.1987 JP 333755/87
(43) Date of publication of application: 05.07.1989
(73) Proprietor: Takeda Chemical Industries, Ltd., Chuo-ku, Osaka (JP)
(72) Inventor: Tsujimoto, Yasuhiro, Shimizu-shi Shizuoka-ken 424 (JP); Kurita, Masayuki, Shimizu-shi Shizuoka-ken 424 (JP); Miki, Minoru, Shimizu-shi Shizuoka-ken 424 (JP)
(74) Representative: Eisenführ, Speiser & Partner

(56) References cited:
- US-A- 3 979 539
- US-A- 4 246 210
- US-A- 4 362 585
- Encyclopedia of Composite Materials and Components, Editor: Martin Grayson, 1983, pages 969 and 970

## Description

The present invention relates to a sheet-shaped molding material according to the preamble of claim 1.

Conventionally, a soft sheet-shaped molding material which is grasped by carrier films and comprises a compound of paste-shaped material chiefly composed of a resin and glass fibers, is difficult to retain in the shape it has immediately after manufacturing. Especially, various problems are caused in the production of the sheet-shaped molding material when the sheet-shaped molding material is continuously wound around a cylindrical core pipe in the production step of transportation and storage.

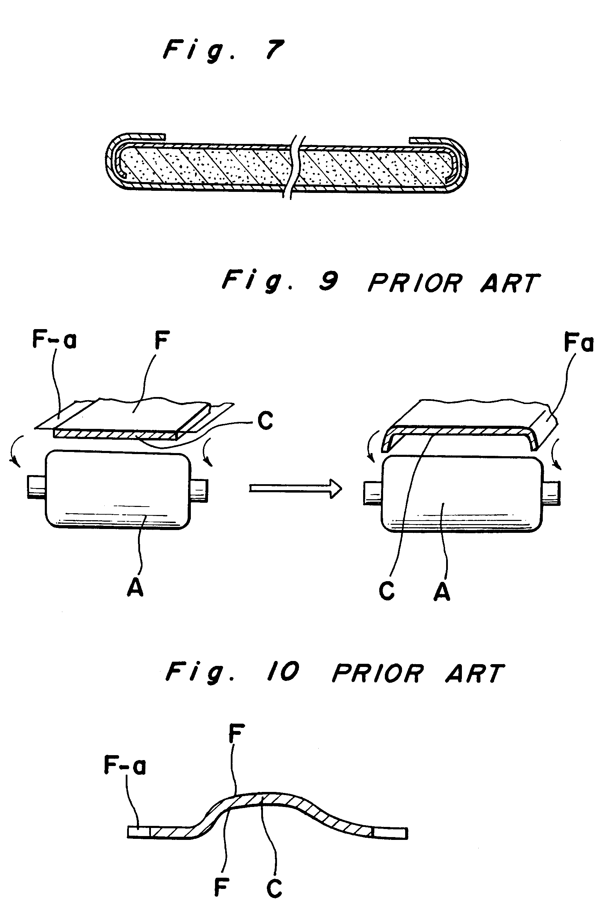

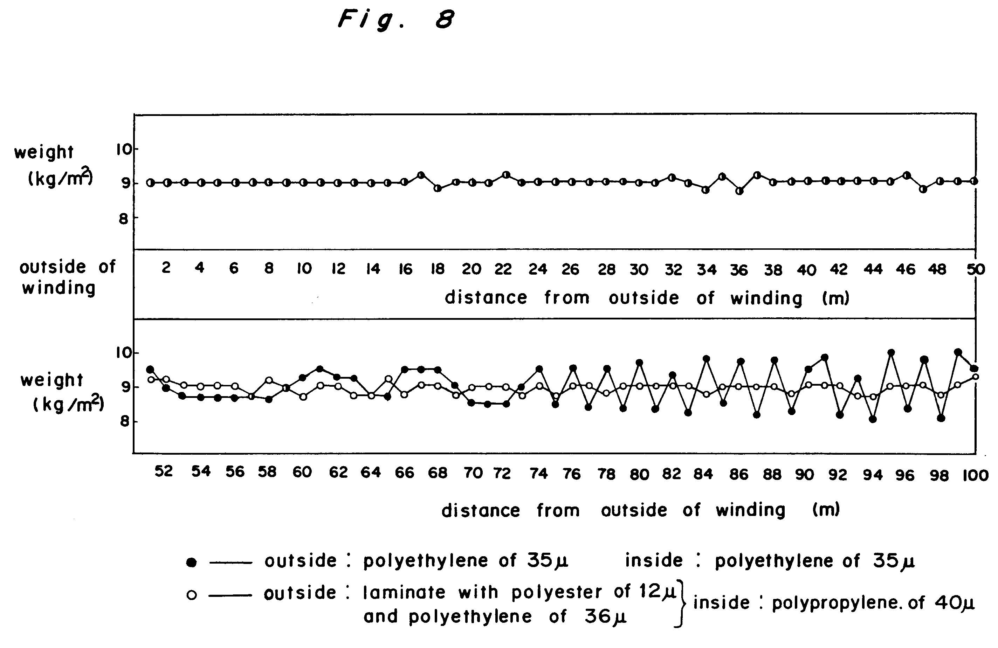

Firstly, film made of polyethylene or polypropylene is conventionally used as the carrier film, as this type is comparatively large in elongation percentage with respect to tensile force to be applied thereto. The carrier film is required to be strongly wound to some extent in the winding operation, since the winding section of a roll does not become truly round because of weak winding force. Thus, the carrier film is normally wound through the tensile force of 20 kg or more per meter. Upon application of such a tensile force, the carrier film in contact with the compound extends, but both the end portions (referred to as ear portions) are not in contact in the width direction and do not extend, so that they are bent inwardly when being wound around the core pipe A as shown in Fig. 9. Also, the film F which is in contact with the compound C is wetted by styrene (which is a component of the compound C) so as to be extended, while the ear portion F-a not in contact is not extended as shown hereinabove and is therefore likewise bent inwardly as shown in Fig. 9. When the so-called "ear cramp" phenomenon causes to bend both the end portions inwardly in the manner as described hereinabove, the central portion in the width direction is curved outwardly, the face does not become flat as shown in Fig. 10, and the curvature is not easily restored to its shape during the use of the material after maturation. When the film is forced to be restored to the flat face, the ear portions may be cut off or injured. Also, an inconvenience is caused that the film can not be passed into an automatic cutting machine for cutting the sheet-shaped molding material during the use because of the curvature of the film.

Secondly, when the film is extended because of the tensile force during the winding operation, the compound disposed near the core pipe becomes thinner, thus making it impossible to provide an equal thickness.

Thirdly, as mentioned above one roll is 150 through 160 kg at its limit (with 100 kg being normal in the use of the conventional carrier film), and because the wound molding material is curved, the thickness is hard to retain equally. However, when the winding weight of one roll is small, exchanging the roll during the molding requires more time and more labor, thus resulting in a problem of productivity. The number of rolls to be used is increased when moldings of large size are applied in a way to be pressed evenly on a part of a user manufacturing products by use of this type of molding material. Accordingly, it is demanded that the weight of one roll be increased. Press molding, which uses molding materials such as SMC, TMC, BMC or the like is becoming a main stream from handlaying the moldings through rationalization requests caused by recent higher personnel expenses. The spray method requires more hands. As the moldings become as large in size as a bathtub, water-proof pan, bathtub with wash place attached thereto and so on, one piece becomes large in size, and the molding material is demanded to be wider and thicker. However, in the case of the TMC of thick wideness, the weight per unit area becomes larger, and the thickness is hard to be equalized, with the material being hard to be restored when it has been curved, so that the winding method is not adopted with the TMC molding material composed of the conventional construction. Thus, the accommodation in the sheet-shaped encasing has a problem, because the productivity is lower and the request for larger size is hard to be solved.

Fourthly, as the compound of the paste-shaped material immediately after the manufacturing operation and glass fibers is extremely soft, it may have a problem of being forced out from both ends of the carrier on both the upper and lower faces in the winding operation. Particularly, when the tensile force becomes larger, and the winding weight becomes larger, leaking at both ends increases, with the inconvenience that it becomes difficult to keep the thickness uniform in the width direction.

US-A 4 362 585 discloses a method for making a fibrous reinforced resin sheet of the type wherein a composition comprising a resin and fibrous reinforcement is fed onto a carrier web. There, the composition is formed into a sheet and is covered with a top film to form a sandwich-like structure. The improvement disclosed comprises the carrier web being a uniaxially drawn polyamide film.

US-A 3 979 539 discloses a method and apparatus for making a sheet molding compound. A thickened uncured thermosetting resin mix is supplied as a thin coating to a sheet of plastic film and chopped fibers are deposited on the resin film to provide a composite laminate. The side edges of the plastic film are then folded inwardly in a double fold and the laminate is wound in coiled form.

In "Encyclopedia of Composite Materials and Components", M. Grayson, ed, John Wiley & Sons, New York 1983, page 969, there is disclosed how a water barrier can be formed on the surface of paper by coating the paper with a continuous film of a suitable material. Amongst others, polyethylene is recommended which is applied by extrusion.

It is the object of the present invention to provide a sheet-shaped molding material comprising a molding material in the form of a sheet of compound and a pair of carrier films, wherein the carrier films are used to remove the curvature and bending caused during the winding and also to equalize the thickness, thus making it possible to increase the winding weight and to have a bigger size of the sheet-shaped molding material to be wound into one roll. An aspect of this object is to provide a sheet-shaped molding material wherein both the ends of the carrier film in the width direction may be bent in order to prevent leaking of the compound.

This object is attained by a sheet-shaped molding material according to claim 1. Suitable and preferred embodiments are defined in the sub-claims.

Films made of polyester (PET), nylon, cellulose acetate, cellophane, extended polypropylene, polystyrene, polyvinylidene chloride, polyvinyl alcohol, paper and so on are suitably used as second films which are low in elongation percentage. These films are previously laminated with the first film which is in contact against the compound before being used. The first films have an advantage of being easily peeled off from the compound when the compound is used. Polyethylene and polypropylene are suitably used as a film which is in contact against the compound. When the thickness of the film is made 10 through 50 µm or so, the film made of polyester, nylon and so on which is used as the second film which is low in the elongation percentage of the outer layer is preferred to be 5 through 50 µm or so in thickness.

The carrier film may have the surplus portion folded together in the same direction so as to prevent the compound from being leaked sideways, the surplus portion being extended from both ends in the width direction of the compound.

The thickening agent made of MgO paste (magnesia paste) and various types of coloring agents made of liquid are mixed with compound liquid, wherein the compound of the sheet-shaped molding material has, as a paste-shaped material, liquid resin such as unsaturated polyester resin, polystyrene or the like, styrene monomer of liquid, calcium carbonate aluminum hydroxide or the like, zinc stearate of particles, calcium stearate or the like, BPO (benzoyl peroxide) of liquid or paste, catalyst made of TBPB (t-butyl perbenzoate) or the like, HQ (hydroquinone) made of particles, stabilizer such as PBQ (parabenzoquinone) or the like composed. The glass fiber which is used as a reinforcing material for a solid material to be mixed with the paste-like material is glass roving of 12 µm, TEX 4630 type cut into a given length of 2.54 cm (1 inch) or so.

The deformation by the extension of the carrier film to be caused during the winding is controlled by the winding operation in the roll shape with both the faces of the compound being covered with the carrier film, resulting in that the winding weight can be increased from the conventional 100 kg to 1,000 kg. Needless to say, it may be applied to the thin SMC, but it may be applied even to a case where the TMC of thickness (5 through 10 mm or so) of approximately three times as much as the SMC. The large sized sheet-shaped molding material composed these kinds of SMC, TMC may be adopted ideally for the materials of the large sized moldings for the various applications. For example, housing facilities of bathtub, water-proof pan, water tank panel, balcony and so on, motorcar appliances of air spoiler, air intake, roof, side panel, engine hood, and so on, chair, tray, parabola antenna and so on may be manufactured suitably.

These and other objects and features of the present invention will become clear from the following description taken in conjunction with the preferred embodiments thereof with reference to the accompanying drawings, in which:
Fig. 1 is a cross-sectional view of a prior art sheet-shaped molding material;
Fig. 2 is a cross-sectional view of a sheet-shaped molding material in accordance with an embodiment of the invention;
Fig. 3 is a view schematically showing an arrangement, related to the present invention, of the manufacturing process of the sheet-shaped molding material;
Fig. 4 is a schematic perspective view showing a mechanism for folding the end of a carrier film to be employed in the arrangement of Fig. 3;
Fig. 5 is a cross-sectional view showing the folding condition by a depressing roller employed in the arrangement of Fig. 3;
Fig. 6 is a cross-sectional view of a sheet-shaped molding material folded;
Fig. 7 is a cross-sectional view of a sheet-shaped molding material showing the other folding method;
Fig. 8 is a graph showing the experiment results through comparisons between the molding material of the present invention and the molding material of the conventional one;
Fig. 9 is a view showing a problem to be caused during the roll winding by the conventional molding material;
Fig. 10 is a cross-sectional view showing a prior art curved molding material; and
Fig. 11 is a perspective view showing a roll of a sheet-shaped molding material to be manufactured.

Before the description of the present invention proceeds, it is to be noted that like parts are designated by like reference numerals throughout the accompanying drawings.

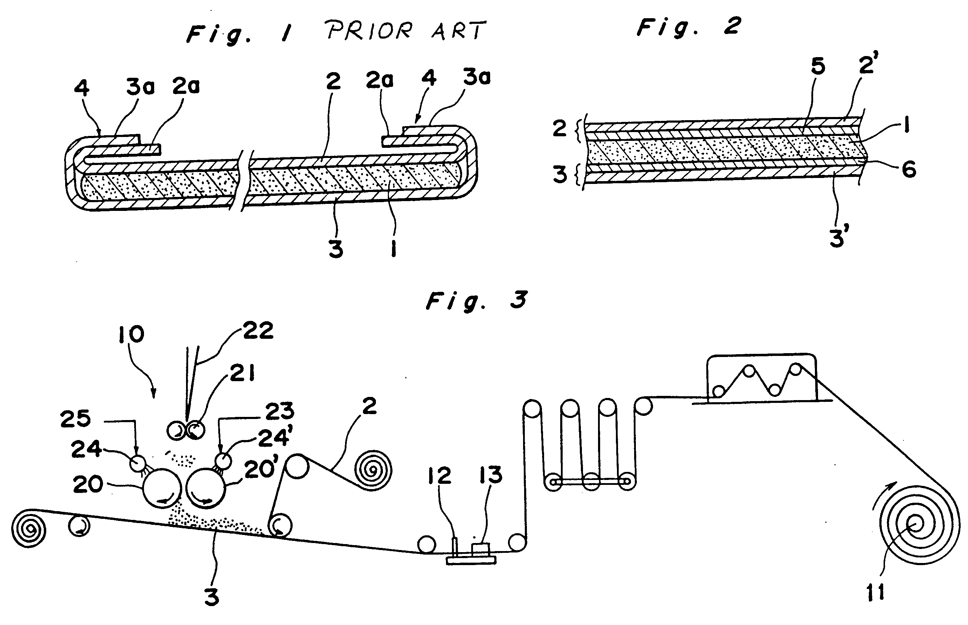

Referring to Fig. 1, there is shown a cross-section of a sheet-shaped molding material having prior art carrier films. The molding material is to be wound up into a roll and generally includes a compound 1, and a pair of carrier films 2, 3 or cover sheets for grasping both the upper, lower faces of the compound 1. The carrier films 2, 3 are extended excessively at both of their ends with respect to the width direction of the compound 1, and as shown in the drawing, the extended end portions 2a, 3a thereof are piled up to be folded on the top face side to form the ear portions 4, 4 of both the ends so as to close both the ends in the width direction of the compound 1 for preventing the sideway leaking of the compound 1. The compound comprises a paste-like material including a paste-like curable material including a mixture among resin, bulking agent and the like, and a reinforcing solid material of glass fiber and the like, which is so called as a molding material such as SMC, TMC, BMC.

In the case of the present invention, at least one of the carrier films 2, 3 used is not easy to extend and is 1% or lower in the elongation percentage with respect to the tension of 20 kg/m per unit width, and/or 3% lower in elongation percentage when it has been wetted in styrene. Concretely, films 2, 3 made of polyester (PET), nylon, cellulose acetate, cellophane, extended polypropylene, polystyrene, polyvinylidene chloride, polyvinyl alcohol, paper and so on are employed as the carrier film. The carrier films 2, 3 of both the upper and lower faces of the compound 1 are respectively formed of films small in elongation percentage, but only one single face may also be formed of a film small in elongation percentage.

Fig. 2 shows a sheet-shaped molding material of the present invention. Two-layer-shaped laminate films are used as carrier films having films 5, 6 of polyethylene or polypropylene on the side of the contact with the compound 1 which are applied to films 2', 3' each being low in elongation percentage, so that the user may easily peel off the carrier films 2, 3 during the use of the molding material.

The laminate films 2, 3 have the films 5, 6 of the polyethylene, polypropylene made into two layers by application of bonding agent after the manufacturing of films 2', 3'. The inner layer of the laminate films is 10 through 50 µm or so in the thickness, while the thickness of the outer-layer is 5 through 50 µm on the employment of a film made of polyester, nylon and so on.

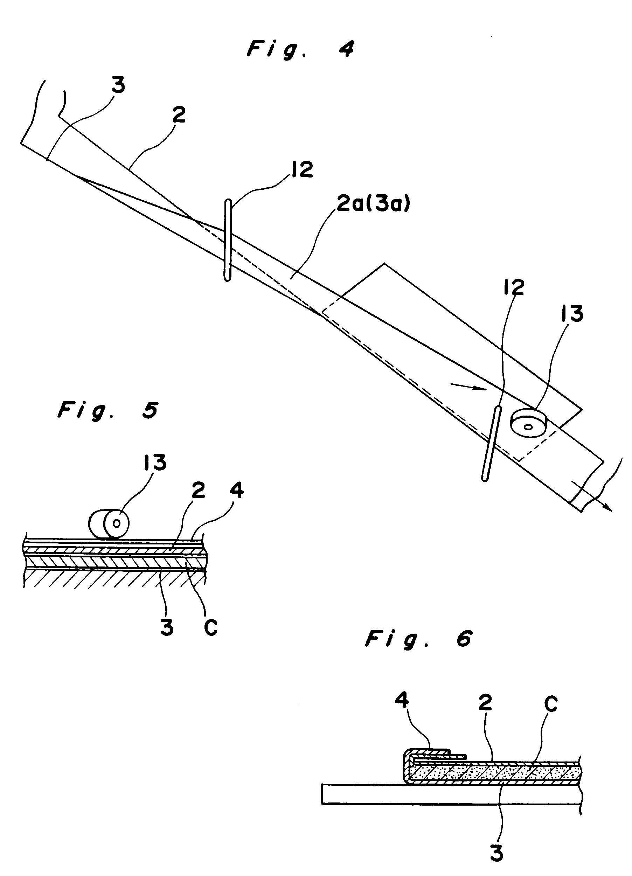

The sheet-shaped molding material shown in Fig. 1 and Fig. 2 respectively prevents with both the ends of the carrier films 2, 3 being folded, the compound 1 from being protruded from both the ends in the width direction thereof as described hereinabove. The folding means is placed in a transport step into a winding step for the winding operation in the roll shape by a cylindrical core pipe 11 from an impregnating step for grasping by the upper, lower carrier films 2, 3 (or carrier film made into two layer shape with the laminate film) the compound 1 produced by the impregnant apparatus 10 to a winding step for winding in the roll shape by the cylindrical core pipe 11, as schematically shown in Fig. 3. As shown from Fig. 4 to Fig. 6, the folding means has a bending rod 12 disposed to upwardly bend both the ends 2a, 3a of the carrier films, 2, 3 together, has a depressing roller 13 disposed to downwardly bend both the bent ends 2a, 3a. Both the ends 2a, 3a piled up are folded back on the top face of the top face carrier film 2 to form an ear 4. The length of the ear 4 folded back is approximately 10 cm, with the width of the compound 1 being 100 cm. The shape of the folded back portion in both ends of the carrier films 2, 3 is not restricted in the embodiment, and may be formed as shown in Fig. 7, with a closing portion having only to be so formed of that the compound 1 may not be protruded from both ends of the carrier films 2, 3.

As schematically shown in Fig. 3, in the impregnating apparatus 10, above a pair of impregnation rollers 20, 20', the glass roving 22 is cut into glass fibers of 2.54 cm (1 inch) in size by a glass roving cutter 21 so as to be dropped over the impregnation rollers 20, 20'.

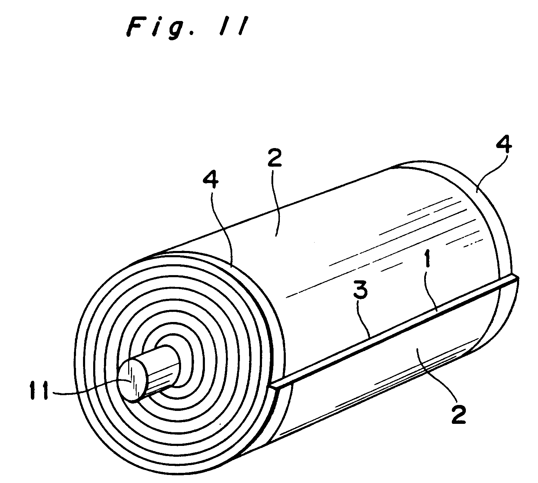

Paste-like material 23 is scattered by pipes for supply use 24, 24' on the surface of the impregnation rollers 20, 20', so that the glass fibers are impregnated in the paste-shaped material 23 in passing through the gap of the rollers 20, 20' for impregnation use so as to downwardly move the impregnated compound along the face of the rollers 20, 20' for dropping it over the lower face carrier film 3 fed into the lower position. Then, it is covered with the upper face carrier film 2, and is transported into a roll winding position on the side of the low stream so as to be wound by the cylindrical core pipe 11 to provide a roll as shown in Fig. 11.

As the paste-like material which is component of the compound 1, the thickening agent made of MgO paste (magnesia paste) and various types of coloring agents made of liquid are mixed with compound liquid, wherein unsaturated polyester resin, liquid resin such as styrene solution of polyethylene or the like, styrene monomer of liquid, calcium carbonate of particles, aluminum hydroxide or the like, zinc stearate of particles, calcium stearate or the like, BPO (benzoyl peroxide) of liquid or paste, TBPB (t-butyl perbenzoate) or the like, HQ (hydroquinone) made of particles, PBQ (parabenzoquinone) or the like are composed.

### (Experiment Example)

TMC of 1 m in product width, 9 kg per m x m in unit weight is wound by 100 m (900 kg in weight) around an FRP-made core pipe of 25 cm in diameter. The product is cut off 1 m by 1 m after the aging completion so as to measure the weight, and at the same time, the observe the "ear cramp" condition of the appearance.

The component of the product compound is as follows.

| | |
|---|---|
| Polymal 6409 (unsaturated polyester resin made by Takeda Chemical Industries, Ltd.) | 100 parts by weight |
| Flowsen UF-20 (powder polyethylene made by Iron Chemistry Company, Ltd.) | 5 parts by weight |
| Tertiary butyl peroxybenzoate (organic peroxide) | 1 part by weight |
| Parabenzoquinone (stabilizer) | 0.01 parts by weight |
| Zinc stearate acid (inner mold releasing agent) | 3 parts by weight |
| Super SS (calcium carbonate, made by Maruo Calcium Company, Ltd.) | 100 parts by weight |
| Glass Fiber SM-14(1'') (roving glass made by Nippon Glass Fiber Company, Ltd.) | 90 parts by weight |

Two kinds of a case (A), where the conventional polyethylene film is used, and a case (B), where a carrier film of the present invention is used, are made as a carrier film grasping both the upper and lower faces (outer side and inner side) of the compound.
- Conventional embodiment (A): The outer side (top face of Fig. 1 and Fig. 2) is 35 µ polyethylene. The inner side is 35 µm polyethylene.
- Present invention embodiment (B): The outer side is 12 µm polyester, with the polyethylene side in contact against the compound by the laminate of 30 µm polyethylene. The inner side is 40 µm polypropylene.

The comparison check between the two types of products of the conventional embodiment (A) and the present invention embodiment (B) is in results as follows.

### · Outer appearance check:

- Conventional embodiment (A): The "ear cramp" is worse. When the product is made flat upon application of load so as to pass through a cutting machine, the product is broken from the ears thereof before it is caused to pass through the cutting machine.
- Present invention embodiment (B): As the "ear cramp" is removed, the product becomes flat without application of the force when the product is unwound, thus resulting in successful cutting into the given size.

### · Weight check of 1 m x 1 m cut sample:

The difference between the conventional embodiment (A) and the present embodiment (B) is compared. The sample is cut 1 m by 1 m with the product being rewound so as to measure the weight. The result is shown in Fig. 8, the (B) of the present embodiment being less in the weight dispersion.

It is said from the result that the thickness equalization in the width direction and winding direction in the embodiment of the present invention may be almost achieved.

As is clear from the above description, in the sheet-shaped molding material in the present invention, a film of at least single face out of both the upper and lower faces grasping the compound (molding material) is a film which is hard to extend, i.e., extends with respect to the tensile force during the roll winding and is extremely small in elongation percentage when it has been wetted in the styrene, so that a so-called "ear cramp" may be prevented from being caused during the roll winding. In the roll winding condition, the level degree in the width direction may be retained. The weight of one roll of the roll winding may be increased up to approximately 1,000 kg so as to remove the conventional problem. Accordingly, the thick, wide TMC roll winding, which was impossible to be effected conventionally, may be effected, thus increasing the productivity of the TMC. As the weight of one roll may be increased, the molding material of large size may be provided even in either the TMC or the SMC. The molding material has the various advantages in that it may be used suitably as the molding material for the large-sized moldings.

## Claims

1. A sheet-shaped molding material comprising a sheet of compound (1) including a paste-like curable material and a reinforcing solid material, and a pair of carrier films (2, 3) to be covered onto both the whole upper and lower faces of the compound,
**characterized in that**
at least one of the carrier films (2, 3) is formed of a two-layer shape including a first film (5, 6) composed of polyethylene, polypropylene and a second film (2', 3') bonded on the first film (5, 6) so as to come into contact with the compound (1) through the first film, the second film(s) (2', 3')
having a property of 1 % or lower in elongation percentage with respect to the tension of 20 kg/m and/or
3 % or lower in elongation percentage after having been wetted in styrene.

2. The molding material of claim 1, characterized in that at least one of the second films (2', 3') is made of a substance selected from polyester (PET), nylon, cellulose acetate, cellophane, extended polypropylene, polystyrene, polyvinylidene chloride, polyvinyl alcohol, and paper.

3. The molding material of claim 1 or 2, characterized in that both the ends (2a, 3a) in the width direction of at least one of the carrier films (2, 3) covering the compound (1) are folded back (4) onto the other sides of the compound (1).

## Patentansprüche

1. Flächiges Formmaterial, aufweisend ein Verbundmaterial (1), welches ein pastenartiges, härtbares Material und ein festes Verstärkungsmaterial einschließt, und ein Paar Trägerschichten (2, 3), mit denen sowohl die gesamte obere als auch die gesamte untere Seite des Verbundmaterials zu bedecken sind,
**dadurch gekennzeichnet**, daß
mindestens eine der Trägerschichten (2, 3) in Gestalt von zwei Lagen ausgebildet ist, die eine erste Schicht (5, 6), die aus Polyethylen, Polypropylen aufgebaut ist, und eine zweite Schicht (2', 3') aufweisen, die an die erste Schicht (5, 6) gebunden ist, um über die erste Schicht mit dem Verbundmaterial (1) in Kontakt zu kommen, wobei die zweite(n) Schicht(en) (2', 3') aufweist bzw. aufweisen
eine Eigenschaft von 1 % oder weniger bezüglich der prozentualen Dehnung bei der Zugspannung von 20 kg/m und/oder
3 % oder weniger bezüglich der prozentualen Dehnung nach Befeuchten in Styrol.

2. Formmaterial nach Anspruch 1,
dadurch gekennzeichnet, daß mindestens eine der zweiten Schichten (2', 3') aus einer Substanz hergestellt ist, die ausgewählt ist aus Polyesther (PET), Nylon, Celluloseacetat, Cellophan, gestrecktem Polypropylen, Polystyrol, Polyvinylidenchlorid, Polyvinylalkohol und Papier.

3. Formmaterial nach Anspruch 1 oder 2,
dadurch gekennzeichnet, daß beide Enden (2a, 3a) in der Breitenrichtung mindestens einer der Trägerschichten (2, 3), die das Verbundmaterial (1) bedecken, auf die andere Seite des Verbundmaterials (1) umgefaltet sind.

## Revendications

1. Matériau de moulage en forme de feuille, comprenant une feuille de compound (1) constitué d'un matériau pâteux durcissable et d'un matériau solide de renforcement, et une paire de films supports (2, 3) à appliquer sur la totalité des deux faces supérieure et inférieure du compound, caractérisé en ce qu'au moins un des films supports (2, 3) a une configuration bicouche comportant a premier film (5, 6) constitué de polyéthylène, de polypropylène, et un second film (2', 3') collé au premier film (5, 6) de façon à venir en contact avec le compound (1) par l'intermédiaire du premier film, le(s) second(s) film(s) (2', 3') ayant la caractéristique de présenter un pourcentage d'allongement inférieur ou égal à 1 % correspondant à la tension de 20 kg/m et/ou un pourcentage d'allongement inférieur ou égal à 3 % après avoir été mouillé(s) dans du styrène.

2. Matériau de moulage selon la revendication 1, caractérisé en ce qu'au moins un des seconds films (2', 3') est constitué d'une substance sélectionnée parmi le polyester (PET), le Nylon, l'acétate de cellulose, la Cellophane, le polypropylène étiré, le polystyrène, le poly(chlorure de vinylidène), le poly(alcool vinylique) et le papier.

3. Matériau de moulage selon la revendication 1 ou 2, caractérisé en ce que les deux extrémités (2a, 3a), dans la direction de la largeur, d'au moins un des films supports (2, 3) couvrant le compound (1) sont repliées (4) sur les autres côtés du compound (1).
